# FASCICULE DE BREVET EUROPEEN

(11) **EP 0 524 068 B1**
(45) Date de publication et mention de la délivrance du brevet: **12.04.1995**
(21) Numéro de dépôt: 92401991.2
(22) Date de dépôt: 09.07.1992
(51) Int. Cl.: B62B 9/18, B60G 11/10

(54) **Dispositif de suspension pour voiture d'enfant, comportant une lame composite à raideur variable**
Einrichtung für Kinderwagenaufhängung mit einer Komposit-Blattfeder von unterschiedlicher Steifigkeit
Suspension device for childrens' carriages, comprising a composite leaf spring of variable stiffness

(30) Priorité: 15.07.1991 FR 9108894
(43) Date de publication de la demande: 20.01.1993
(73) Titulaire: AMPAFRANCE S.A., F-92107 Boulogne-Billancourt Cedex (FR)
(72) Inventeur: Bigo, Jean, F-49300 Cholet (FR)
(74) Mandataire: Casalonga, Axel

(56) Documents cités:
- DE-A- 1 580 175
- FR-A- 386 908
- FR-A- 713 257
- GB-A- 286 891

## Description

La présente invention concerne un dispositif de suspension pour véhicules à vitesse lente et de faible poids tels que, par exemple, une voiture d'enfant.

Les voitures d'enfant sont généralement constituées d'un cadre et de quatre roues ou quatre jeux de deux roues jumelées. Chaque roue ou chaque jeu de roues est relié par l'intermédiaire d'un dispositif de suspension à un piètement constitué généralement d'un tube.

Les dispositifs de suspension connus, comportent au moins un ressort dit "à boudin", travaillant en compression ou en extension, et les ressorts sont généralement souples pour donner une impression de confort, lorsque la cliente teste la voiture d'enfant dans le magasin. Mais lorsque le bébé est installé dans la voiture d'enfant, les ressorts à boudin restent souples et la voiture d'enfant est alors peu confortable pour le bébé.

La présente invention a pour but d'assurer un meilleur confort pour de telles voitures d'enfant au moyen d'un dispositif de suspension grâce auquel la suspension est souple à vide et plus ferme en charge.

La présente invention a pour objet un dispositif de suspension pour véhicules à vitesse lente et de faible poids, comportant un corps à surface arrondie fixé sur un piètement du véhicule et un ressort en forme de lame fixé à l'une de ses extrémités sur le corps et prenant appui à la fois sur la surface arrondie dudit corps et sur un axe de roue à son autre extrémité libre, en vue de sa flexion. Selon l'invention, l'axe de roue est solidaire d'un support articulé sur le corps par l'intermédiaire d'un axe placé entre le point de fixation de la lame sur le corps et le point d'appui de l'extrémité libre de cette lame sur l'axe de roue.

La surface arrondie du corps présente de préférence un rayon de courbure supérieur au rayon de courbure de la lame lors de sa flexion naturelle en l'absence de ladite surface arrondie.

L'extrémité libre du ressort en forme de lame peut avantageusement glisser sur l'axe de roue lorsque ledit ressort est sollicité à la flexion de sorte que la partie active de la lame, en position de flexion maximale, est plus courte que la partie active de la lame vide.

Le ressort peut avantageusement comprendre une lame composite pultrudée.

Dans un mode de réalisation préféré de l'invention le corps du dispositif de suspension comporte deux ailes latérales portant l'axe d'articulation du support et entre lesquelles est installée la lame. Le support peut également comporter deux ailettes latérales placées à l'extérieur des ailes du corps.

Dans un mode de réalisation particulièrement avantageux de l'invention une contre-lame est disposée sous le ressort en forme de lame et fixée à l'une de ses extrémités au corps, son autre extrémité libre pouvant prendre appui, après une première rotation déterminée du support articulé, sur une butée solidaire dudit support. Cette butée peut par exemple être constituée par un pontet reliant entre elles les ailettes latérales du support articulé.

La contre-lame peut avantageusement présenter sur sa face inférieure un passage traversant, de profil oblong, adapté pour recevoir l'axe d'articulation du support articulé afin de jouer un rôle de butée après une deuxième rotation déterminée du support articulé, plus importante que la première rotation.

Le passage traversant est avantageusement placé sensiblement dans la zone médiane de la contre-lame. Celle-ci présente de préférence une épaisseur allant en diminuant depuis son extrémité fixe vers son extrémité libre.

La contre-lame est avantageusement réalisée en matière synthétique et peut être venue de moulage avec un élément d'appui rigide de profil arrondi qui vient se monter dans le corps en définissant la surface arrondie de ce dernier. Le ressort en forme de lame peut alors se loger aisément dans une fente définie entre l'élément d'appui et la contre-lame.

Le mouvement de rotation du support articulé peut être limité par le contact de butée prévu sur les ailes latérales du corps qui viennent coopérer avec les bords des ailettes latérales du support articulé.

Il est décrit ci-après, à titre d'exemples non limitatifs et en référence aux figures des dessins annexés, deux variantes de dispositif de suspension selon l'invention.

La figure 1 montre une vue complète d'une première variante du dispositif, en coupe selon I de la figure 2.

La figure 2 montre une vue de dessous selon II de la figure 1.

La figure 3 montre une vue en coupe analogue à la figure 1 d'une deuxième variante de l'invention, dans la position à vide.

La figure 4 est une vue analogue à la figure 3 montrant le dispositif dans la position de charge normale.

Et la figure 5 est une vue analogue à la figure 3 montrant le dispositif dans la position de charge maximale.

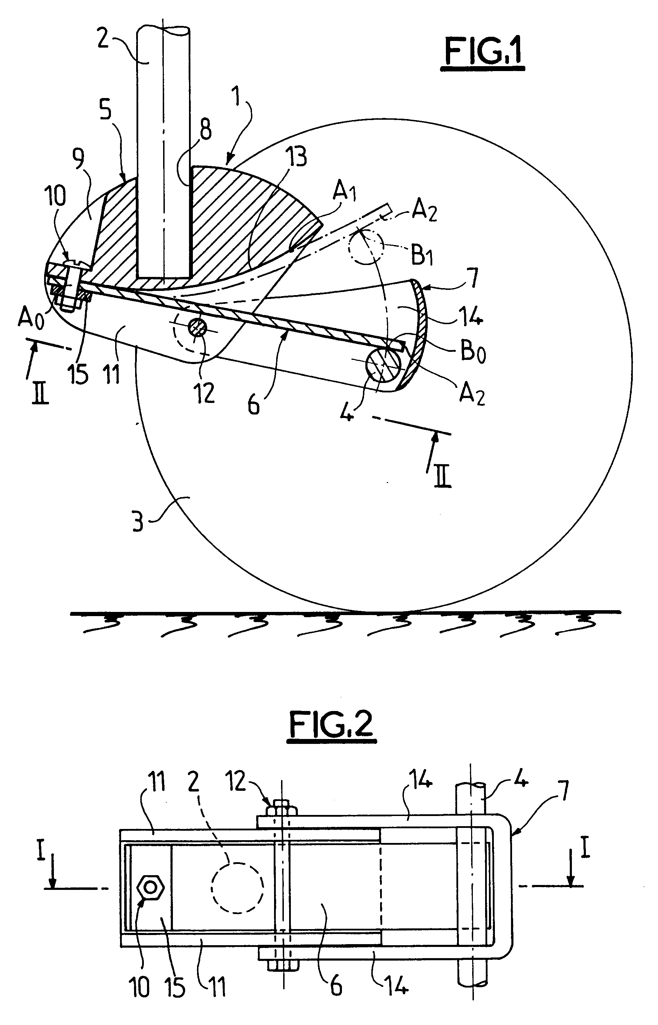

Tel qu'il est illustré sur la figure 1, le dispositif 1 selon l'invention est représenté monté sur un piètement 2 d'une poussette pour enfant, constitué d'un tube, le dispositif 1 portant une roue 3 par l'intermédiaire de son axe 4.

Le dispositif 1 comporte principalement un corps 5, un ressort en forme de lame 6 et un support 7 articulé sur le corps 5. Le corps 5 comporte un orifice 8 , dans lequel le tube 2 est logé, un lamage extérieur 9 permettant la mise en place d'un boulon 10, qui rend solidaire le corps 5 et une extrémité de la lame 6. Un plat 15, servant de rondelle, est placé entre la lame 6 et l'écrou du bouton 10. Le corps 5 comporte, en outre, deux ailes 11 latérales, portant un axe 12, constitué par exemple d'un bouton, la lame 6 étant installée entre les deux ailes 11 du corps 5, comme le montre la figure 2. Le corps 5 présente au niveau du raccordement des deux ailes 11, et sur toute sa largeur, d'une extrémité à l'autre des ailes 11, un arrondi 13 sur lequel la lame 6 prend progressivement appui, lors de sa flexion, comme le montre la lame représentée en traits interrompus dans la figure 1.

La lame 6 est par exemple une lame pultrudée.

Le support 7 comporte également deux ailettes latérales 14 munies chacune, à une extrémité, d'un orifice permettant la mise en place de l'axe 12. Les ailettes 14 de ce support se trouvent à l'extérieur des ailes 11 du corps 5, comme le montre la figure 2. Le support 7 est ainsi articulé en rotation sur le corps 5 par l'intermédiaire de l'axe 12. Le support 7 porte l'axe 4 de la roue 3 qui peut être placée en porte à faux d'un coté ou de l'autre du dispositif 1. L'axe 4 peut également porter deux roues jumelées placées de part et d'autre du dispositif 1.

Un tel dispositif fonctionne de la manière suivante :
A vide, tel que représenté en traits forts sur la figure 1, la lame 6 est quasiment rectiligne et elle est en appui à son extrémité dite "libre" sur l'axe 4 de la roue 3.

En charge normale, ce qui correspond sensiblement au poids du bébé, la lame fléchit et la suspension devient alors plus ferme.

Enfin, en charge maximale, ce qui correspond généralement au poids du bébé et à une sollicitation due aux défauts de planéité du sol, la lame fléchit jusqu'à atteindre sa flexion maximale représentée en traits interrompus sur la figure 1. La lame est alors en appui sur pratiquement toute la longueur de l'arrondi 13, en fait, jusqu'au point référencé A₁.

L'arrondi 13 permet d'augmenter la résistance à la fatigue de la lame 6 du fait que le rayon de courbure de cet arrondi est supérieur au rayon de courbure qui serait décrit par la lame 6 lors de sa flexion naturelle, en l'absence d'arrondi.

D'autre part, lors de la rotation du support 7, la lame 6 fléchit mais elle glisse aussi sur l'axe 4. En effet, le point d'articulation du support 7 (c'est à dire l'axe 12) n'est pas confondu avec le point d'articulation de la lame (c'est à dire le point A₀), de sorte que, en position de flexion maximale, la partie non active de la lame représentée par le segment A₂-B₁, est plus grande que la partie non active de la lame, à vide, représentée par le segment A₂-B₀.

L'arrondi 13, qui permet d'augmenter la résistance à la fatigue de la lame, comme cela a été dit précédemment, permet aussi de diminuer la partie active de la lame 6 lors de sa flexion et contribue ainsi à obtenir une raideur variable, qui augmente au fur et à mesure que la lame fléchit. En effet, la figure 1 montre, en traits interrompus, que la partie active de la lame 6 en position de flexion maximale qui est représentée par le segment A₁-B₁, est beaucoup plus courte que le segment A₀-B₀ représentant la partie active, à vide. La suspension devient donc plus ferme au fur et à mesure que la lame fléchit.

La position de l'axe de rotation 12 du support 7 et l'arrondi 13, assurent donc, séparément ou en combinaison, une modification de la raideur de la lame 6 et permettent ainsi d'obtenir une sensation de souplesse à vide tout en ayant un bon confort en charge.

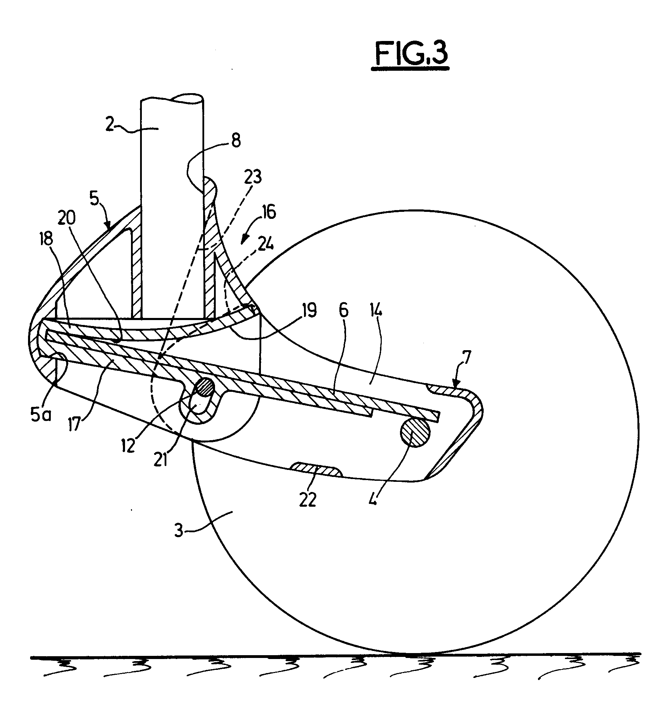

Les figures 3 à 5 illustrent une deuxième variante de réalisation du dispositif de l'invention. Sur ces figures les pièces identiques ou analogues portent les mêmes références.

Le dispositif référencé 16 dans son ensemble est monté comme précédemment sur un piètement 2 d'une poussette pour enfant constitué par un tube. On retrouve la roue 3 munie de son axe 4 sur lequel s'appuie l'extrémité libre de la lame ressort 6. Le dispositif comporte également un corps 5 par rapport auquel est articulé un support 7 qui peut pivoter autour d'un axe d'articulation 12.

Dans cette variante, une contre-lame 17 est disposée sous la majeure partie de la lame ressort 6. La contre-lame 17 est réalisée dans l'exemple illustré sous la forme d'une pièce moulée en matière synthétique venue de moulage avec un élément d'appui rigide 18 qui vient s'appuyer sur une de ses faces sur le corps 5 et présente sur sa face opposée un profil arrondi 19 qui joue le rôle de l'arrondi 13 de la variante illustrée sur la figure 1.

A l'opposé de son extrémité libre, la contre-lame 17 est solidaire de l'élément d'appui 18, une fente 20 étant définie entre l'élément d'appui 18 et la contre-lame 17. Cette fente 20 présente une épaisseur sensiblement égale à celle de la lame ressort 6 qui peut alors venir se loger dans la fente 20 par son extrémité fixe c'est-à-dire son extrémité opposée à l'extrémité libre qui s'appuie sur l'axe 4 de la roue 3, ce qui assure de manière simple la fixation de la lame 6.

L'ensemble de la pièce moulée qui comprend l'élément d'appui 18 et la contre-lame 17 est logé dans un encastrement 5a pratiqué dans le corps 5.

La contre-lame 17 présente sur sa face inférieure un passage traversant 21 de profil oblong dirigé sensiblement de haut en bas adapté pour recevoir l'axe d'articulation 12 du support articulé 17. L'axe 12 peut donc se déplacer à l'intérieur du passage 21 entre deux positions de butée. La position de butée haute illustrée sur la figure 3 correspond comme on le verra plus loin avec la position à vide du dispositif de suspension 16.

La contre-lame 17 présente une épaisseur allant en diminuant depuis son extrémité fixe solidaire de l'élément d'appui rigide 18 jusqu'à son extrémité libre qui se termine sous la lame ressort 6 à proximité de l'axe 4. La longueur de la contre-lame 17 est suffisante pour que son extrémité libre puisse venir en contact avec un pontet 22 reliant entre elles les ailettes latérales 14 du support articulé 7 et placé en position inférieur de celui-ci. Une butée 23 formée par un rebord de la matière constitutive de chacune des ailes latérales du corps 5 permet, par contact avec le bord 24 de l'ailette latérale 14 correspondante du support articulé 7 de limiter le mouvement de rotation de ce dernier.

On va maintenant décrire le déplacement relatif des différents éléments du dispositif de suspension 7 lors du fonctionnement :

La figure 3 illustre la position du dispositif à vide. Dans cette position, la lame ressort 6 est quasiment plane et se trouve en appui à son extrémité libre sur l'axe 4 de la roue 3. La contre-lame 17 également plane est en contact sur toute sa face supérieure avec la face inférieure de la lame ressort 6. L'axe d'articulation 12 est en butée haute à l'intérieur du passage oblong 21.

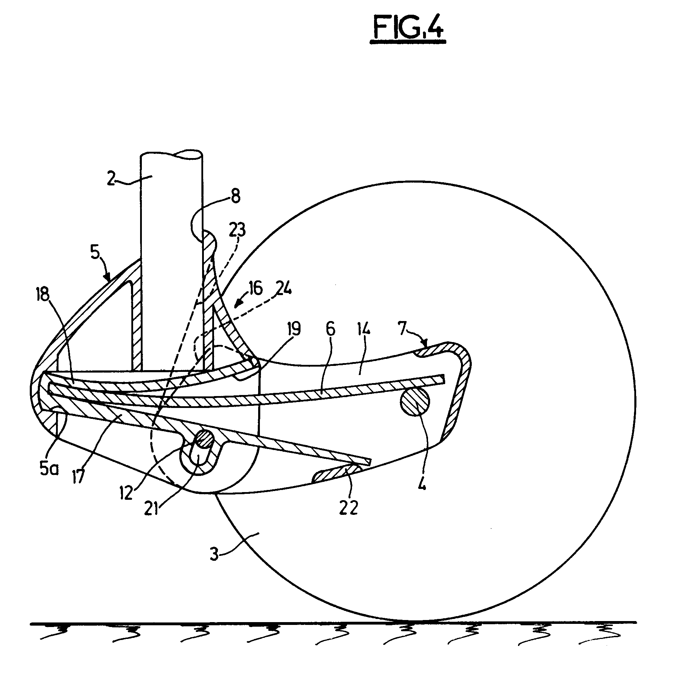

Sur la figure 4 qui illustre la charge normale correspondant sensiblement au poids du bébé, la lame ressort 6 a fléchi, la suspension étant devenue plus ferme. Comme dans la première variante illustrée sur la figure 1, la raideur de la suspension augmente progressivement grâce au fait que l'extrémité fixe de la lame ressort 6 entre en contact progressivement avec l'arrondi 19, ce qui diminue progressivement sa partie active. Le même effet est obtenu par le glissement de l'extrémité libre de la lame 6 sur l'axe 4 comme dans la variante précédente. De la même manière également le rayon de courbure de l'arrondi 19 est de préférence supérieur au rayon de courbure qui serait décrit par la lame 6 dans sa flexion naturelle en l'absence d'arrondi.

La charge normale maximale correspond sensiblement à la position illustrée sur la figure 4, dans laquelle l'extrémité libre de la contre-lame 17, vient en contact avec le pontet 22 qui joue un rôle de butée. Jusque là, la contre-lame 17 est restée plane et n'a joué aucun rôle dans le dispositif de suspension. L'axe d'articulation 12 se trouve toujours en butée haute dans le passage oblong 21.

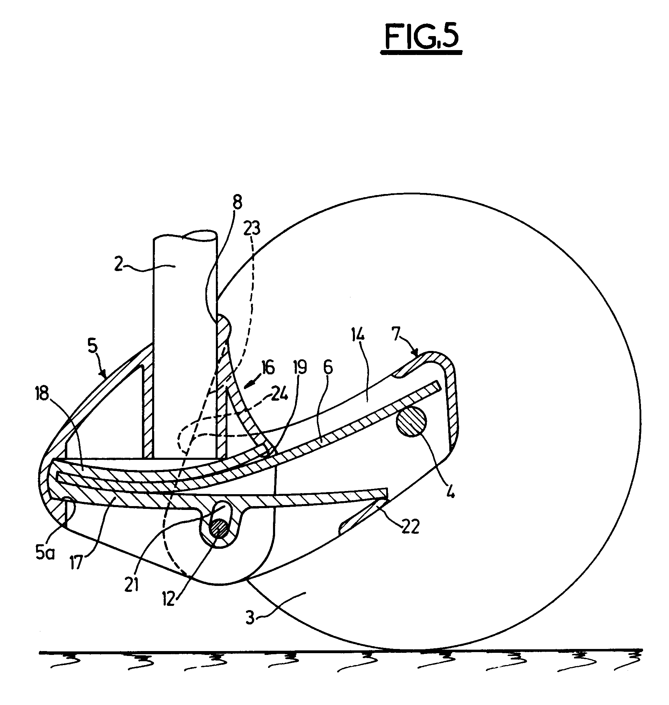

Lorsque la charge augmente encore jusqu'à la position correspondant à la charge maximale illustrée sur la figure 5, la lame 6 poursuit sa flexion dans les mêmes positions que précédemment, en restant toujours en contact avec l'arrondi 19, sa longueur active poursuivant sa diminution.

Simultanément, la contre-lame 17 fléchit. Dans ce mouvement, la partie active fléchissante de la contre-lame 17 varie également au fur et à mesure du fléchissement étant donné que la portion de la contre-lame 17 qui est proche de son extrémité fixe, vient en contact avec la portion correspondante de la lame ressort 6 qui présente un profil arrondi correspondant à celui de l'arrondi 19. Ce fléchissement se poursuit jusqu'a' ce que la contre-lame 17 soit remontée par rapport à l'axe d'articulation 12 celui-ci venant en butée basse dans le passage oblong 21 comme illustré sur la figure 5. Le dispositif prend alors la position correspondant à la charge maximale telle qu'illustrée sur la figure 5 dans laquelle le mouvement de pivotement du support articulé 7 par rapport au corps 5 est arrêté par la coopération des butées 23 et 24.

La présence de la contre-lame 17 permet d'améliorer encore les résultats déjà obtenus avec la première variante et en particulier d'augmenter la dureté de la suspension pour des charges dépassant la charge normale.

## Revendications

1. Dispositif de suspension pour véhicules à vitesse lente et de faible poids, comportant un corps (5) à surface arrondie fixé sur un piètement (2) du véhicule et un ressort en forme de lame (6) fixé à l'une de ses extrémités sur le corps et prenant appui à la fois sur la surface arrondie dudit corps et sur un axe de roue (4) à son autre extrémité libre, en vue de sa flexion, caractérisé par le fait que l'axe de roue (4) est solidaire d'un support (7) articulé sur le corps (5) par l'intermédiaire d'un axe (12) placé entre le point de fixation (A₀) de la lame sur le corps et le point d'appui (B) de l'extrémité libre de la lame sur l'axe de roue (4).

2. Dispositif selon la revendication 1, caractérisé par le fait que la surface arrondie (13) du corps (5) présente un rayon de courbure supérieur au rayon de courbure de la lame (6) lors de sa flexion naturelle en l'absence de ladite surface arrondie.

3. Dispositif selon les revendications 1 ou 2, caractérisé par le fait que l'extrémité libre du ressort en forme de lame peut glisser sur l'axe de roue lorsque ledit ressort est sollicité à la flexion de sorte que la partie active (A₁ - B₁) de la lame, en position de flexion maximale, est plus courte que la partie active (A₀ - B₀) de la lame, à vide.

4. Dispositif selon l'une quelconque des revendications précédentes, caractérisé par le fait que le ressort comprend une lame composite pultrudée.

5. Dispositif selon l'une quelconque des revendications précédentes, caractérisé par le fait que le corps (5) comporte deux ailes latérales (11) portant l'axe d'articulation (12) du support et entre lesquelles est installée la lame (6).

6. Dispositif selon la revendication 5 caractérisé par le fait que le support (7) comporte deux ailettes latérales (14) placées à l'extérieur des ailes (11) du corps (5).

7. Dispositif de suspension selon l'une quelconque des revendications précédentes, caractérisé par le fait qu'une contre-lame, disposée sous le ressort en forme de lame, est fixée à l'une de ses extrémités au corps (5), son autre extrémité libre pouvant prendre appui, après une première rotation déterminée du support articulé (7), sur une butée solidaire dudit support (7).

8. Dispositif selon les revendications 6 et 7, caractérisé par le fait que la butée est constituée par un pontet reliant entre elles les ailettes latérales (14) du support articulé (7).

9. Dispositif selon l'une des revendications 7 ou 8, caractérisé par le fait que la contre-lame présente sur sa face inférieure un passage traversant de profil oblong adapté pour recevoir l'axe d'articulation du support articulé (7) afin de jouer un rôle de butée, après une deuxième rotation déterminée du support articulé (7), plus importante que la première rotation.

10. Dispositif selon la revendication 9, caractérisé par le fait que le passage traversant est placé sensiblement dans la zone médiane de la contre-lame.

11. Dispositif selon l'une quelconque des revendications 7 à 10, caractérisé par le fait que la contre-lame présente une épaisseur allant en diminuant depuis son extrémité fixe vers son extrémité libre.

12. Dispositif selon l'une quelconque des revendications 7 à 11, caractérisé par le fait que la contre-lame est réalisée en matière synthétique.

13. Dispositif selon la revendication 12, caractérisé par le fait que la contre-lame est venue de moulage avec un élément d'appui rigide de profil arrondi qui vient se monter dans le corps (5) en définissant la surface arrondie de ce dernier, une fente étant définie entre l'élément d'appui et la contre-lame pour le logement de l'extrémité fixe du ressort en forme de lame (6).

14. Dispositif selon la revendication 6, caractérisé par le fait que des butées sont prévues sur les ailes latérales (11) du corps (5) pour limiter le mouvement de rotation du support articulé (7) par contact avec les bords des ailettes latérales (14) dudit support articulé (7).

## Claims

1. Suspension device for slow speed and lightweight vehicles, comprising a body (5) with a rounded surface fixed on an underframe (2) of the vehicle and a spring in the shape of a strip (6) fixed at one of its ends to the body and bearing both on the rounded surface of the said body and on a wheel axle (4) at its other free end, with a view to bending, characterised in that the wheel axle (4) is securely fixed to a support (7) articulated on the body (5) by the intermediary of a pin (12) placed between the fixing point (A₀) of the strip on the body and the bearing point (B) of the free end of the strip on the wheel axle (4).

2. Device according to Claim 1, characterised in that the rounded surface (13) of the body (5) has a radius of curvature which is greater than the radius of curvature of the strip (6) in natural bending in the absence of the said rounded surface.

3. Device according to Claims 1 or 2, characterised in that the free end of the strip-shaped spring can slide on the wheel axle when the said spring is stressed in bending so that the active part (A₁-B₁) of the strip, in the position of maximum bending, is shorter than the active part (A₀-B₀) of the strip, under no load.

4. Device according to any one of the preceding claims, characterised in that the spring comprises an extruded composite strip.

5. Device according to any one of the preceding claims, characterised in that the body (5) comprises two lateral wings (11) bearing the articulation pin (12) of the support and between which wings the strip (6) is installed.

6. Device according to Claim 5, characterised in that the support (7) comprises two small lateral wings (14) placed outside the wings (11) of the body (5).

7. Suspension device according to any one of the preceding claims, characterised in that a counter-strip, arranged under the strip-shaped spring, is fixed at one of its ends to the body (5), its other free end being able to bear, after a first specified rotation of the articulated support (7), on a stop which is securely fixed to the said support (7).

8. Device according to Claims 6 and 7, characterised in that the stop is constituted by a yoke linking the small lateral wings (14) of the articulated support (7) together.

9. Device according to one of Claims 7 or 8, characterised in that the counter-strip has on its lower surface a traversing passage of oblong profile adapted to receive the articulation pin of the articulated support (7) in order to act as a stop, after a second specified rotation of the articulated support (7), which is greater than the first rotation.

10. Device according to Claim 9, characterised in that the traversing passage is placed substantially in the median zone of the counter-strip.

11. Device according to any one of Claims 7 to 10, characterised in that the counter-strip has a thickness decreasing from its fixed end towards its free end.

12. Device according to any one of Claims 7 to 11, characterised in that the counter-strip is made of a synthetic material.

13. Device according to Claim 12, characterised in that the counter-strip is a result of moulding with a rigid bearing element of rounded profile which is mounted in the body (5) defining the rounded surface of the latter, a slot being defined between the bearing element and the counter-strip for housing the fixed end of the strip-shaped spring (6).

14. Device according to Claim 6, characterised in that stops are provided on the lateral wings (11) of the body (5) in order to limit the rotational movement of the articulated support (7) by contact with the edges of the small lateral wings (14) of the said articulated support (7).

## Patentansprüche

1. Radaufhängungsvorrichtung, die für langsame Fahrzeuge mit geringem Gewicht vorgesehen ist und ein an einem Stützbein (2) des Fahrzeuges befestigtes Hauptteil (5) mit einer abgerundeten Fläche sowie eine Blattfeder (6) aufweist, die an dem einen ihrer Enden an dem Hauptteil befestigt ist und sich bei Durchbiegung gleichzeitig auf der abgerundeten Fläche des Hauptteiles und an ihrem anderen, freien Ende auf einer Radachse (4) abstützt, dadurch gekennzeichnet, daß die Radachse (4) an einem Halter (7) befestigt ist, der an dem Hauptteil (5) mittels einer Achse (12) angelenkt ist, die sich zwischen dem Befestigungsstelle (A₀) der Blattfeder an dem Hauptteil und dem Abstützstelle (B₀) des freien Endes der Blattfeder auf der Radachse (4) befindet.

2. Vorrichtung nach Anspruch 1, dadurch gekennzeichnet, daß die abgerundete Fläche (13) des Hauptteils (5) einen Krümmungsradius aufweist, der größer ist als der Krümmungsradius der Blattfeder (6) bei ihrer natürlichen Durchbiegung, wenn die genannte abgerundete Fläche nicht vorhanden wäre.

3. Vorrichtung nach den Ansprüchen 1 oder 2, dadurch gekennzeichnet, daß, wenn die Blattfeder auf Biegung beansprucht ist, das freie Ende der Blattfeder auf der Radachse derart gleiten kann, daß bei maximaler Durchbiegung der wirksame Teil (A₁ - B₁) der Blattfeder kürzer ist als der wirksame Teil (A₀ - B₀) der Blattfeder im unbelasteten Zustand.

4. Vorrichtung nach einem der vorstehenden Ansprüche, dadurch gekennzeichnet, daß die Feder ein stranggepreßtes Federblatt aus Verbundwerkstoff aufweist.

5. Vorrichtung nach einem der vorstehenden Ansprüche, dadurch gekennzeichnet, daß der Hauptteil (5) zwei seitliche Wangen (11) aufweist, die die Gelenkachse (12) des Halters lagern und zwischen denen das Federblatt (6) angeordnet ist.

6. Vorrichtung nach Anspruch 5, dadurch gekennzeichnet, daß der Kalter (7) zwei seitliche Schenkel (14) aufweist, die sich außerhalb der Wangen (11) des Hauptteiles (5) befinden.

7. Radaufhängungsvorrichtung nach einem der vorstehenden Ansprüche, dadurch gekennzeichnet, daß ein unter der Blattfeder angeordnetes Zusatzfederblatt an dem einen seiner Enden an dem Hauptteil (5) befestigt ist und daß sich sein anderes, freies Ende nach einer bestimmten ersten Verschwenkung des angelenkten Halters (7) auf einem mit dem Kalter (7) verbundenen Anschlag abstützen kann.

8. Vorrichtung nach den Ansprüchen 6 und 7, dadurch gekennzeichnet, daß der Anschlag durch einen die seitlichen Schenkel (14) des angelenkten Halters (7) miteinander verbindenden Bügel gebildet ist.

9. Vorrichtung nach einem der Ansprüche 7 oder 8, dadurch gekennzeichnet, daß das Zusatzfederblatt auf seiner Unterseite eine längliche Durchgangsöffnung zur Aufnahme der Schwenkachse des angelenkten Halters (7) aufweist, um nach einer zweiten bestimmten Verschwenkung des angelenkten Halters (7), die größer ist als die erste Verschwenkung, als Anschlag zu wirken.

10. Vorrichtung nach Anspruch 9, dadurch gekennzeichnet, daß die Durchgangsöffnung ungefähr im mittleren Bereich des Zusatzfederblatts angeordnet ist.

11. Vorrichtung nach einem der Ansprüche 7 bis 10, dadurch gekennzeichnet, daß das Zusatzfederblatt eine von seinem ortsfesten Ende zu seinem freien Ende allmählich abnehmende Dicke aufweist.

12. Vorrichtung nach einem der Ansprüche 7 bis 11, dadurch gekennzeichnet, daß das Zusatzferderblatt aus Kunststoff besteht.

13. Vorrichtung nach Anspruch 12, dadurch gekennzeichnet, daß das Zusatzfederblatt zusammen mit einem steifen abgerundeten Abstützelement gespritzt ist, das an dem Hauptteil (5) angebracht ist und das die abgerundete Fläche dieses letzteren bildet, und daß zwischen dem Abstützelement und dem Zusatzfederblatt ein Spalt zur Aufnahme des ortsfesten Endes der Blattfeder (6) begrenzt ist.

14. Vorrichtung nach Anspruch 6, dadurch gekennzeichnet, daß auf den seitlichen Wangen (11) des Hauptteiles (5) Anschläge vorgesehen sind, um die Schwenkbewegung des angelenkten Halters (7) dadurch zu begrenzen, daß die Anschläge mit den Rändern der seitlichen Schenkel (14) des angelenkten Halters (7) in Berührung kommen.
